# EUROPÄISCHE PATENTSCHRIFT

(11) **EP 3 334 701 B1**
(45) Veröffentlichungstag und Bekanntmachung des Hinweises auf die Patenterteilung: **10.07.2019**
(21) Anmeldenummer: 16754254.7
(22) Anmeldetag: 12.08.2016
(51) Int. Cl.: C04B 41/71

(54) **BESCHICHTETER BETONKÖRPER**
COATED CONCRETE BODY
CORPS DE BÉTON REVÊTU

(30) Priorität: 12.08.2015 DE 102015215414
(43) Veröffentlichungstag der Anmeldung: 20.06.2018
(73) Patentinhaber: Wobben Properties GmbH, 26607 Aurich (DE)
(72) Erfinder: HÖLSCHER, Norbert, 26607 Aurich (DE); VOIGT, Edelfried, 26605 Aurich (DE); HOFFMANN, Frank, 51766 Engelskirchen (DE)
(74) Vertreter: Eisenführ Speiser
(86) Internationale Anmeldenummer: PCT/EP2016/069232
(87) Internationale Veröffentlichungsnummer: WO 2017/025625

(56) Entgegenhaltungen:
- DE-A1-102012 203 280

## Beschreibung

Die vorliegende Erfindung betrifft einen beschichteten Betonkörper, insbesondere ein Element für einen Turm, insbesondere für einen Turm für eine Windenergieanlage, sowie ein Verfahren zur Herstellung eines erfindungsgemäßen beschichteten Betonkörpers.

Während des Aushärtens von Betonkörpern entstehen an der Betonoberfläche stets Lunker, Poren und Löcher, die zur Vermeidung der Ansammlung von Regenwasser und/oder Kondenswasser mit nachfolgender Erosion durch Wärme-Frosteinwirkung, zur Erhöhung der mechanischen Belastbarkeit der Betonoberfläche und/oder aus dekorativen Gründen gefüllt bzw. geschlossen werden müssen.

DE 10 2012 203 280 B4 offenbart ein Verfahren zur Beschichtung von Betonoberflachen, insbesondere von Türmen für Windenergieanlagen umfassend die Schritte:
- Beschichtung der Betonoberfläche mit einer Spachtelschicht, umfassend einen Beschichtungsstoff enthaltend einen lösungsmittelfreien 2K-Polyharnstoff, wobei die Spachtelschicht eine Grundierungsfunktion aufweist,
- Abziehen und/oder Abstoßen der Spachtelschicht, wobei die Spachtelschicht derart entfernt wird, dass auf der gesamten Betonoberfläche ein Rest der Spachtelschicht in unterschiedlicher Schichtdicke von zumindest 5 µm verbleibt,
- Beschichtung der Betonoberfläche mit einer Deckschicht, wobei die Deckschicht einen Beschichtungsstoff aus einem lösungsmittelarmen 2K-Polyharnstoff mit einem Lösungsmittelanteil unter 20 Gew.-% umfasst.

Die gemäß DE 10 2012 203 280 B4 in der Spachtelschicht enthaltenen Polyharnstoffe werden durch Reaktion von Polyasparginsäureestern (Aspartaten) mit Isocyanaten gebildet. Der Einsatz von Isocyanaten und Aspartaten ist aber aus Gründen des Arbeits- und Gesundheitsschutzes problematisch. Dies gilt insbesondere für Spachtelmassen, da bei deren üblicherweise manuell erfolgendem Auftragen auf eine Oberfläche mit einem Spachtelwerkzeug der Bearbeiter regelmäßig in unmittelbarer Nähe zu der beschichtenden Oberfläche tätig ist und so in wesentlich stärkerem Maße diesen gesundheitsschädlichen Stoffen ausgesetzt ist, als dies z.B. beim Auftragen eines Anstrichstoffs mittels einer Rolle der Fall ist. Daher sind beim Auftragen von Beschichtungsmaterialien, insbesondere Spachtelmassen, welche Isocyanate und/oder Aspartate enthalten, aufwändige Personenschutz-Maßnahmen nötig wie das Tragen von Schutzkleidung und Schutzmaske.

Beschichtungen für Betonkörper müssen eine Vielzahl von Anforderungen erfüllen hinsichtlich der Verarbeitbarkeit, der Verträglichkeit mit dem Beton (insbesondere dessen alkalischen Bestandteilen), der Haftung auf der Betonoberfläche und der Langzeitbeständigkeit gegenüber Witterungseinflüssen, UV-Strahlung, Temperaturwechseln, Feuchtigkeit u.ä. Insbesondere muss, um eine schnelle und somit wirtschaftlich effiziente Herstellung beschichteter Betonkörper zu gewährleisten, die Beschichtung auf den noch nicht vollständig ausgehärteten und gegebenenfalls sogar noch feuchten und warmen Beton auftragbar sein, so dass sie zuverlässig auf der Betonoberfläche haftet. Außerdem sollen die Beschichtung sowie die zu ihrer Herstellung verwendeten Spachtelmassen gesundheits- und umweltgefährdende Stoffe wie z.B. Isocyanat und Aspartaten möglichst nur in geringen Mengen enthalten und bevorzugt frei von Isocyanat und Aspartaten sein. Des weiteren muss eine zuverlässige Füllung bzw. Schließung der Lunker, Löcher und Poren gewährleistet sein. Somit war es eine Aufgabe der vorliegenden Erfindung, einen beschichteten Betonkörper und eine Verfahren zu seiner Herstellung bereitzustellen, welche diese Anforderungen erfüllen.

Die oben genannte Aufgabe wird erfindungsgemäß gelöst durch einen beschichteten Betonkörper, umfassend
(a) einen Betonkörper mit einer Betonoberfläche
(b) eine auf der Betonoberfläche angeordnete Beschichtung, wobei die Beschichtung umfasst
   (i) eine erste Anstrichschicht, ausgewählt aus der Gruppe bestehend aus Schichten basierend auf (Meth)acrylat-, Epoxid- und Aspartatpolymeren und -copolymeren
   (ii) eine zweite Anstrichschicht, ausgewählt aus der Gruppe bestehend aus Schichten basierend auf (Meth)acrylat-, Epoxid- Aspartat- und Urethanpolymeren und -copolymeren
   (iii) eine zwischen der ersten und der zweiten Anstrichschicht angeordnete aus einer ersten mineralischen Spachtelmasse gebildete Schicht, die ein mineralisches Bindemittel enthält mit einer mittleren Beschichtungsdicke der ersten mineralischen Spachtelmasse von 0,005 mm bis 2 mm und/oder eine mittleren Auftragsmenge an trockener mineralischer Spachtelmasse von 10 g/m² bis 500 g/m²
wobei die Beschichtung eine Haftzugfestigkeit bestimmt nach DIN EN ISO 4624 von ≥ 1,0 N/mm² besitzt und der Verbund aus Betonkörper und Beschichtung einen Bruchanteil im Beton von ≥ 20% bestimmt nach DIN EN ISO 4624 besitzt.

Ein weiterer Aspekt der Erfindung besteht in einem Verfahren zum Herstellen eines beschichteten erfindungsgemäßen Betonkörpers, umfassend die Schritte:
a) Bereitstellen eines Betonkörpers,
b) Bereitstellen von Beschichtungsmaterial für die erste Anstrichschicht,
c) Bereitstellen von Beschichtungsmaterial für die zweite Anstrichschicht,
d) Bereitstellen der ersten mineralischen Spachtelmasse, wobei die erste mineralische Spachtelmasse ein mineralisches Bindemittel enthält
e) Auftragen des Beschichtungsmaterials für die erste Anstrichschicht mittelbar oder unmittelbar auf den Betonkörper,
f) flächiges Auftragen der ersten mineralischen Spachtelmasse auf die erste Anstrichschicht, wobei nach Schritt f) die erste mineralische Spachtelmasse so entfernt wird, dass eine mittlere Beschichtungsdicke der ersten mineralischen Spachtelmasse von 0,005 mm bis 2 mm und/oder eine mittlere Auftragsmenge an trockener mineralischer Spachtelmasse von 10 g/m² bis 500 g/m² entsteht, und
g) Auftragen des Beschichtungsmaterials für die zweite Anstrichschicht auf die erste mineralische Spachtelmasse.

Überraschenderweise hat sich gezeigt, dass mit dem erfindungsgemäßen Beschichtungsverfahren eine wirtschaftliche effiziente Herstellung beschichteter Betonkörper möglich ist, und die beschichteten Betonkörper eine fest haftende, dauerhafte langzeitstabile Beschichtung aufweisen, obwohl es im Stand der Technik unüblich ist, mineralische Spachtelmassen auf Anstrichschichten aufzutragen, insbesondere auf Anstrichschichten aus filmbildenden Anstrichstoffen. Dementsprechend ist es auch nicht üblich,

eine aus mineralischer Spachtelmasse, die ein mineralisches Bindemittel enthält, gebildete Schicht zwischen zwei Anstrichschichten anzuordnen.

Die Herstellung des Betonkörpers erfolgt gemäß im Stand der Technik üblicher Verfahren aus üblichen Ausgangsmaterialien. In einer bevorzugten Ausführungsform der vorliegenden Erfindung ist der Betonkörper ein Element für einen Turm, insbesondere für einen Turm für eine Windenergieanlage. Die Herstellung von Elementen für einen Turm einer Windenergie in Form von Betonkörpern gehört zum Stand der Technik.

Beim Aufbringen der Beschichtung weist der Beton des Betonkörpers typischerweise eine Restfeuchte von bis maximal 4 Gew.-% auf, in bestimmten Fällen auch mehr als 4 Gew.-% und eine Temperatur im Bereich von 1 bis 55 °C, bevorzugt 15 bis 50 °C.

Die erste Anstrichschicht sowie die zweite Anstrichschicht ist ausgewählt aus der Gruppe bestehend aus Schichten basierend auf (Meth)acrylat-, Epoxid-, Urethan- und Aspartatpolymeren und -copolymeren.

Der Begriff "(Meth-)Acrylat-, Epoxid-, Urethan- und Aspartatpolymere und -copolymere" umfasst hierbei
- Polymere, die nur eine Art von Wiederholungseinheiten aus der Gruppe bestehend aus (Meth-)Acrylat-, Epoxid-, Urethan- und Aspartat-Wiederholungseinheiten enthalten
- Polymere, die neben einer Art von Wiederholungseinheiten aus der Gruppe bestehend aus (Meth-)Acrylat-, Epoxid-, Urethan- und Aspartat-Wiederholungseinheiten mindestens eine Art weiterer Wiederholungseinheiten umfassen (Copolymere).

Die weitere Art von Wiederholungseinheiten in den Copolymeren ist ausgewählt aus der Gruppe bestehend aus (Meth-)Acrylat-, Epoxid-, Urethan- und Aspartat-Wiederholungseinheiten und aus anderen Molekülen (Co-Monomeren) gebildeten Wiederholungseinheiten.

Bei den Copolymeren sind Copolymere aus (Meth-)Acrylat-Widerholungseinheiten und aus anderen Molekülen (Co-Monomeren, z.B. Styrol) gebildeten Wiederholungseinheiten bevorzugt.

Der Begriff (Meth-)Acrylat umfasst hierbei sowohl Acrylat als auch Methacrylat.

"Schichten basierend auf (Meth-)Acrylat-, Epoxid-, Urethan- und Aspartatpolymeren und -copolymeren" bedeutet hierbei, dass das für die Haftung und den Zusammenhalt der Schicht zu 50 % oder mehr, bevorzugt zu 60% oder mehr, besonders bevorzugt zu 75 % oder mehr (bezogen auf die Gesamtmasse der in der Schicht enthaltenen Bindemittel) verantwortliche Bindemittel ausgewählt ist aus den genannten Polymeren und Copolymeren und deren Mischungen, wobei die entsprechenden Polymer bzw. Copolymere im Beschichtungsmaterial in einer zur Bildung einer fest haftenden zusammenhängenden Anstrichschicht ausreichenden Menge enthaltenen ist.

Verseifungsstabil bedeutet hierbei, dass die alkalischen Bestandteile des Betonkörpers die aus dem Beschichtungsmaterial gebildete Anstrichschicht nicht zersetzen.

Die erste Anstrichschicht hat die Aufgabe einer Grundierung. Sie sichert die Haftung zwischen der Betonoberfläche und der aus einer ersten mineralischen Spachtelmasse gebildeten Schicht, die ein mineralisches Bindemittel enthält. Wegen der Nähe der ersten Anstrichschicht zur Betonoberfläche müssen insbesondere die hier einzusetzenden Bindemittel das Erfordernis der Verseifungsstabilität erfüllen.

Bevorzugt werden als Beschichtungsmaterial für die erste Anstrichschicht filmbildende Anstrichstoffe eingesetzt.

Die zweite Anstrichschicht dient insbesondere der Versiegelung der Oberfläche und in bevorzugten Ausführungsformen (siehe unten) der Verbesserung der Haftung weiterer Schichten, z. B. einer dritten Anstrichschicht, die z.B. als Deckschicht fungiert. In bestimmten Ausführungsformen, die keine dritte Anstrichschicht (siehe dazu weiter unten) umfassen, fungiert die zweite Anstrichschicht selbst auch als Deckschicht (außenliegende Schicht). Wenn die zweite Anstrichschicht als (außenliegende) Deckschicht fungiert, ist diese bevorzugt ausgewählt aus der Gruppe bestehend aus Schichten basierend auf (Meth)Acrylat-, Urethan- und Aspartatpolymeren und -copolymeren sowie Schichten basierend auf anderen witterungsbeständigen Beschichtungsmaterialien. Der Test der Witterungsbeständigkeit erfolgt gemäß DIN EN ISO 4892-3.

Die für das Auftragen der ersten und zweiten Anstrichschicht (Schritt e) bzw. Schritt g)) zu verwendenden Beschichtungsmaterialien sind wässrige, lösemittelhaltige oder lösemittelfreie, ein oder mehrkomponentige Beschichtungsmaterialien. Besonders bevorzugt sind wässrige Beschichtungsmaterialien sowie Beschichtungsmaterialien, die keine organischen Lösemittel enthalten (lösemittelfreie Beschichtungsmaterialien). Unter den lösemittelhaltigen Beschichtungsmaterialien sind lösemittelarme Beschichtungsmaterialien bevorzugt.

Unter Lösemitteln werden in Zusammenhang mit der vorliegenden Erfindung Lösemittel im Sinne der TRGS (Technische Regeln für Gefahrstoffe) 610 der Bundesanstalt für Arbeitsschutz und Arbeitsmedizin (BAuA) verstanden, d.h. flüchtige organische Losungsmittel mit einem Siedepunkt bis 200 °C, die bei Normalbedingungen (20 °C und 101,3 kPa) flüssig sind und dazu verwendet werden, andere Stoffe zu lösen oder zu verdünnen, ohne sie chemisch zu verändern.

Lösemittelfrei bedeutet dabei, dass weder die Grundstoffe des Beschichtungsmaterials Lösemittel enthalten, und weder bei der Herstellung noch beim Auftragen des Beschichtungsmaterials Lösemittel zugesetzt werden. Ein minimaler Losungsmittelanteil (<0,5 Gew.-%) kann aus Verunreinigungen resultieren. Lösemittelarm bedeutet dabei, dass das Beschichtungsmaterial einen Lösemittelanteil unter 20 Gew.-%, bezogen auf die Gesamtmasse des Beschichtungsmaterials, aufweist.

Bevorzugt werden Beschichtungsmaterialien eingesetzt aus der Gruppe bestehend aus lösemittelhaltigen einkomponentigen (Meth-)Acrylat-Beschichtungsmaterialien, wässrigen oder 100%igen Epoxidharzen, Urethanen oder deren Precursoren, und wässrigen einkomponentigen (Meth-)Acrylatdispersionen.

Das Auftragen der ersten Anstrichschicht und der zweiten Anstrichschicht erfolgt mittels im Stand der Technik üblicher Verfahren und Geräte, z.B. Rollapplikation mittels Farbrollern oder Spritzapplikationen, wie Hochdruck-, Airless- und Airmix-Spritzverfahren.

In einer Ausführungsform des erfindungsgemäßen Betonkörpers ist es möglich, dass die erste Anstrichschicht unmittelbar auf dem Betonkörper angeordnet ist, d.h. auf der Betonoberfläche des Betonkörpers. In der entsprechenden Ausführungsform des erfindungsgemäßen Verfahrens wird in Schritt e) die erste Anstrichschicht unmittelbar auf den Betonkörper aufgetragen, d.h. auf die Betonoberfläche des Betonkörpers.

In einer alternativen, bevorzugten Ausführungsform des erfindungsgemäßen Betonkörpers ist die erste Anstrichschicht mittelbar auf dem Betonkörper angeordnet, d.h. zwischen der Betonoberfläche und der ersten Anstrichschicht sind eine oder mehrere weitere Schichten angeordnet. In der entsprechenden Ausführungsform des erfindungsgemäßen Verfahrens wird in Schritt e) die erste Anstrichschicht mittelbar auf den Betonkörper aufgetragen, d.h. auf die Oberfläche der auf der Betonoberfläche angeordneten einen oder mehreren weiteren Schichten.

In der erfindungsgemäß auf der Betonoberfläche des Betonkörpers angeordneten Beschichtung ist zwischen der ersten und der zweiten Anstrichschicht eine Schicht aus erster mineralischer Spachtelmasse wie in den Ansprüchen definiert angeordnet, die ein mineralisches Bindemittel enthält. In einer bevorzugten Ausführungsform ist die Schicht aus erster mineralischer Spachtelmasse unmittelbar zwischen der ersten und der zweiten Anstrichschicht angeordnet, d.h. eine erste Oberfläche der Schicht aus erster mineralischer Spachtelmasse grenzt an eine Oberfläche der ersten Anstrichschicht, und eine der ersten Oberfläche gegenüberliegende zweite Oberfläche der Schicht aus erster mineralischer Spachtelmasse grenzt an eine Oberfläche der zweiten Anstrichschicht. In einer alternativen bevorzugten Ausführungsform ist die Schicht aus erster mineralischer Spachtelmasse wie in den Ansprüchen definiert, die ein mineralisches Bindemittel enthält, mittelbar zwischen der ersten und der zweiten Anstrichschicht angeordnet, d.h. mindestens eine Oberfläche der Schicht aus erster mineralischer Spachtelmasse grenzt an eine Oberfläche einer von der ersten Anstrichschicht und der zweiten Anstrichschicht verschiedenen Schicht.

Unter einer mineralischen Spachtelmasse im Sinne der vorliegenden Erfindung ist eine Spachtelmasse zu verstehen, die
- mineralische Feststoffe in Partikelform enthält,
- einen Anteil mineralischer Stoffe von 50 Gew.-% oder mehr, bevorzugt 60 Gew.-% oder mehr, weiter bevorzugt 70 Gew.-% oder mehr, besonders bevorzugt 80 Gew.-% oder mehr und ganz besonders bevorzugt 90 Gew.-% oder mehr aufweist, jeweils bezogen auf das Trockengewicht der mineralischen Spachtelmasse,
- hydraulisch abbindet,
- 1 Gew.-% oder weniger an Isocyanaten, bevorzugt 0,5 Gew.-% oder weniger an Isocyanaten, besonders bevorzugt 0,1 Gew.-% oder weniger an Isocyanaten, jeweils bezogen auf das Trockengewicht der mineralischen Spachtelmasse, und ganz besonders bevorzugt keine Isocyanate enthält, und
- 5 Gew.-% oder weniger an Aspartaten, bevorzugt 2 Gew.-% oder weniger an Aspartaten, weiter bevorzugt 1 Gew.-% oder weniger an Aspartaten, besonders bevorzugt 0,5 Gew.-% oder weniger an Aspartaten, jeweils bezogen auf das Trockengewicht der mineralischen Spachtelmasse, und ganz besonders bevorzugt keine Aspartate enthält.

Besonders bevorzugt sind mineralische Spachtelmassen und daraus gebildete Schichten, die keine Isocyanate und keine Aspartate und keine Reaktionsprodukte von Isocyanaten und Aspartaten enthalten.

Bevorzugt ist die mineralische Spachtelmasse eine zementöse, d.h. Zement, insbesondere Portlandzement, enthaltende mineralische Spachtelmasse.

Bevorzugt ist die mineralische Spachtelmasse eine kunststoffvergütete mineralische Spachtelmasse. Kunststoffvergütete mineralische Spachtelmassen enthalten typischerweise bis zu 20 Gew.-%, bevorzugt bis zu 15 Gew.-%, besonders bevorzugt bis zu 10 Gew.-% organische Bindemittel (Kunststoff), zusätzlich zu den hydraulisch abbindenden mineralischen Bindemitteln.

Das Auftragen der ersten mineralischen Spachtelmasse erfolgt mittels im Stand der Technik üblicher Verfahren und Geräte, z.B. Spachtel, Glättkelle, Maurerkelle, Flächenspachtel, Japanspachtel, Stielspachtel.

Flächiges Auftragen der ersten mineralischen Spachtelmasse bedeutet erfindungsgemäß, dass die erste mineralische Spachtelmasse nicht ausschließlich an den zu füllenden Poren und Lunkern appliziert wird, sondern auch auf die diese Poren und Lunker umgebende Fläche. Erfindungsgemäß bevorzugt hat die Fläche, auf die die erste mineralische Spachtelmasse aufgetragen wird, so dass eine diese Fläche komplett bedeckende Schicht gebildet wird, eine Größe von mindestens 10 cm², bevorzugt 1 m² oder mehr, besonders bevorzugt erfolgt der Auftrag der ersten mineralischen Spachtelmasse ganzflächig auf einer Betonoberfläche des Betonkörpers.

Die zu füllenden Poren, Löcher und Lunker nehmen typischerweise 1 %bis 10 % der Betonoberfläche aus. Da sie sich typischerweise über die gesamte zu beschichtende Oberfläche verteilen, ist ein flächiger Auftrag der ersten mineralischen Spachtelmasse, bevorzugt mit anschließendem Entfernen (vorzugsweise durch Abziehen oder Abstoßen), wirtschaftlicher als ein gezieltes Füllen der einzelnen Poren und Löcher. In bestimmten Fällen konzentrieren sich Poren, Lunker und Löcher auf kleinere Teilbereiche der Betonoberfläche. Betrachtet man nur diese Bereiche, dann können die Poren ca. 40-50% dieser Teilbereiche ausmachen.

Die Bestimmung der Haftzugfestigkeit erfolgt nach DIN EN ISO 4624. Bevorzugt beträgt die Haftzugfestigkeit 1,5 N/mm² oder mehr, besonders bevorzugt 2 N/mm² oder mehr, jeweils gemessen nach 24 Stunden Trocknung bei 20 °C.

Die Bestimmung des Bruchanteils im Beton erfolgt nach DIN EN ISO 4624. Bevorzugt beträgt der Bruchanteil im Beton mehr als 30 %, besonders bevorzugt mehr als 50 %, und ganz besonders bevorzugt 100 %, jeweils gemessen nach 24 Stunden Trocknung bei 20 °C.

In einer bevorzugten Ausführungsform umfasst der erfindungsgemäße beschichtete Betonkörper zwischen der Betonoberfläche des Betonkörpers und der ersten Anstrichschicht eine aus zweiter mineralischer Spachtelmasse gebildete Schicht, wobei diese Schicht vorzugsweise lokal in den Lunkern, Löchern und Poren der Betonoberfläche angeordnet ist. In der entsprechenden Ausführungsform des erfindungsgemäßen Verfahrens wird vor Schritt e) eine zweite mineralische Spachtelmasse bereit gestellt und bevorzugt lokal im Bereich der Lunkern, Poren und Löchern appliziert. Außerhalb der Poren, Löcher und Lunker wird die noch nicht ausgehärtete zweite mineralische Spachtelmasse bevorzugt vollständig wieder entfernt. Das Entfernen der zweiten Spachtelmasse erfolgt bevorzugt durch Abziehen und/oder Abstoßen. Hinsichtlich der Definition des Begriffs "mineralische Spachtelmasse" gilt dabei für die zweite mineralische Spachtelmasse die oben angegebene Definition. Die erste und die zweite mineralische Spachtelmasse können identische oder verschiedene Zusammensetzungen haben. Bevorzugt hat die zweite mineralische Spachtelmasse eine gröbere Körnung als die erste mineralische Spachtelmasse.

Besonders bevorzugt ist die zweite mineralische Spachtelmasse hinsichtlich ihrer Korngrößenverteilung so gewählt, dass sie in der Lage ist, insbesondere Poren und Lunker mit einer Größe von ≥ 10 mm zu verschließen, und die erste mineralische Spachtelmasse ist hinsichtlich ihrer Korngrößenverteilung so gewählt, dass sie in der Lage ist, die von der zweiten mineralischen Spachtelmasse nicht vollständig verschlossenen bzw. verfüllten Poren und Lunker insbesondere mit einer Größe von 10 bis 20 mm und/oder < 10 mm vorzugsweise bündig zu verschließen.

Ein weiteres bei der Auswahl der ersten und zweiten mineralischen Spachtelmasse zu beachtendes Kriterium ist, dass diese auf der gegebenenfalls noch warmen oder heißen Betonoberfläche nicht aufbrennen.

Erfindungsgemäß weist die erste mineralische Spachtelmasse und die daraus gebildete Schicht ein mineralisches (anorganisches) Bindemittel, z.B. auf Basis von Zement auf.

Sofern eine zweite mineralische Spachtelschicht vorhanden ist, ist es in einigen Fällen bevorzugt, dass auch die zweie mineralische Spachtelmasse und die daraus gebildete Schicht ein mineralisches (anorganisches) Bindemittel, z.B. auf Basis von Zement, aufweist.

Die bevorzugte Ausführungsform des erfindungsgemäßen Betonkörpers mit einer aus zweiter mineralischer Spachtelmasse gebildeten Schicht wie oben definiert bzw. die entsprechende Ausführungsform des erfindungsgemäßen Verfahrens zeichnen sich dadurch aus, dass eine besonders zuverlässige und vollständige Füllung bzw. Schließung von Poren und Lunkern erreicht wird. Durch den zusätzlichen Auftrag der zweiten mineralischen Spachtelmasse wird eine anfängliche Verfüllung insbesondere grober Poren und Lunker erreicht, während durch die erste mineralische Spachtelmasse u.a. der beim Trocknen der zweiten mineralischen Spachtelmasse eingetretene Volumenschwund ausgeglichen wird.

Bevorzugt wird in dem erfindungsgemäßen Verfahren vor Schritt e) - oder wenn vor Schritt e) eine zweite mineralische Spachtelmasse bereit gestellt und auf den Betonkörper aufgetragen wird, vor Auftrag der zweiten mineralischen Spachtelmasse - auf der Betonoberfläche Staub oder anderen lose Bestandteile verringert werden und/oder Poren und Lunker geöffnet werden, insbesondere durch eine Maßnahme ausgewählt aus der Gruppe bestehend aus Beaufschlagen mit Druckluft, mechanisches Abreiben, Abfegen mit einem Drahtbesen, Abschleifen oder Wischen. Das Öffnen von Poren und Lunkern ist insbesondere dann erforderlich, wenn diese im frisch hergestellten Betonkörper mit einem Zementfilm überdeckt sind.

Bevorzugt ist ein erfindungsgemäßes Verfahren, wobei das Beschichtungsmaterial bzw. die mineralische Spachtelmasse auf die Betonoberfläche bzw. auf die zuvor aufgetragene Schicht aufgetragen wird, bevor die Betonoberfläche bzw. die zuvor aufgetragene Schicht vollständig ausgehärtet ist.

Vollständig ausgehärtet bedeutet dabei, dass keine weitere Aushärtung mehr möglich ist. Da für die vollständige Aushärtung insbesondere der Betonoberfläche ein hoher Zeitbedarf erforderlich ist, ist es besonders bevorzugt, erfindungsgemäß in Schritt e), f) und/oder g) die aufzutragende Schicht auf die Betonoberfläche bzw. auf die zuvor aufgetragene Schicht aufgetragen wird, bevor die Betonoberfläche bzw. die zuvor aufgetragene Schicht vollständig ausgehärtet ist.

In einer bevorzugten Ausführungsform umfasst die Beschichtung des erfindungsgemäßen beschichteten Betonkörper eine dritte Anstrichschicht. Wenn die dritte Anstrichschicht als (außenliegende) Deckschicht fungiert, ist diese bevorzugt ausgewählt aus der Gruppe bestehend aus Schichten basierend auf (Meth-)Acrylat-, Urethan- und Aspartatpolymeren und -copolymeren sowie Schichten basierend auf anderen witterungsbeständigen Beschichtungsmaterialien. Der Test der Witterungsbeständigkeit erfolgt gemäß DIN EN ISO 4892-3.

Besonders bevorzugt ist diese dritte Anstrichschicht unmittelbar auf der Oberfläche der zweiten Anstrichschicht angeordnet, die der aus der ersten mineralischen Spachtelmasse gebildeten Schicht abgewandt ist. In der entsprechenden Ausführungsform des erfindungsgemäßen Verfahrens wird nach Schritt g) Beschichtungsmaterial für eine dritte Anstrichschicht bereit gestellt und aufgetragen.

Das Auftragen der dritten Anstrichschicht erfolgt mittels im Stand der Technik üblicher Verfahren und Geräte, z.B. Rollapplikation mittels Farbrollern oder Spritzapplikationen, wie Hochdruck-, Airless- und Airmix-Spritzverfahren.

Innerhalb des erfindungsgemäßen Verfahrens wird nach Schritt f) die erste mineralische Spachtelmasse so entfernt, dass
- eine mittlere Beschichtungsdicke der ersten mineralischen Spachtelmasse von 0,005 mm bis 2 mm, bevorzugt 0,08 mm bis 1,5 mm, besonders bevorzugt 0,01 mm bis 1 mm
   und/oder
- eine mittlere Auftragsmenge an trockener mineralischer Spachtelmasse von 10 g/m² bis 500 g/m², bevorzugt 40 g/m² bis 400 g/m², besonders bevorzugt 40 g/m² bis 150 g/m² entsteht.

Eine möglichst geringe Stärke der aus der ersten mineralischen Spachtelmasse gebildeten Schicht sichert eine hohe Haftzugfestigkeit der Beschichtung.

Das Entfernen der ersten mineralischen Spachtelmasse und gegebenenfalls der zweiten mineralischen Spachtelmasse erfolgt bevorzugt durch Abziehen und/oder Abstoßen mittels im Stand der Technik üblicher Verfahren und Geräte, z.B. Glättkelle, Flächenspachtel, Japanspachtel.

Der erfindungsgemäße beschichtete Betonkörper, insbesondere in den oben beschriebenen bevorzugten Ausführungsformen, zeichnet sich aus dadurch, dass eine, bevorzugt mehrere oder alle der folgenden Eigenschaften vorliegen:
- gute Haftung der Beschichtung auf der Betonoberfläche
- hohe UV- und Wetterbeständigkeit der Beschichtung
- hohe Langzeitstabilität der Beschichtung
- hohe Glanz- und Farbtonbeständigkeit
- mechanische Belastbarkeit der Beschichtung
- zuverlässiger Schutz des Betonkörpers vor atmosphärischen Einwirkungen
- Fähigkeit zur Überbrückung von Rissen.

Besonders bevorzugt sind erfindungsgemäße beschichtete Betonkörper, die zwei oder mehr der oben genannten bevorzugten Merkmale aufweisen (sofern es sich nicht um alternative Merkmale handelt, die nicht gleichzeitig in einem und demselben erfindungsgemäß beschichteten Betonkörper vorliegen können).

Besonders bevorzugt sind erfindungsgemäße Verfahren zur Herstellung beschichtete Betonkörper, die zwei oder mehr der oben genannten bevorzugten Merkmale aufweisen (sofern es sich nicht um alternative Merkmale handelt, die nicht gleichzeitig in einer und demselben erfindungsgemäßen Verfahrensvariante verwirklicht können).

Besonders bevorzugt ist der erfindungsgemäße beschichtete Betonkörper (wie in den Ansprüchen definiert) ein Element für einen Turm für eine Windenergieanlage, wobei das Element umfasst:
(a) einen Betonkörper mit einer Betonoberfläche
(b) eine auf der Betonoberfläche angeordnete Beschichtung, wobei die Beschichtung umfasst
   (i) eine erste Anstrichschicht, ausgewählt aus der Gruppe bestehend aus Schichten basierend auf (Meth)acrylat-, Epoxid- und Aspartatpolymeren und -copolymeren
   (ii) eine zweite Anstrichschicht, ausgewählt aus der Gruppe bestehend aus Schichten basierend auf (Meth)acrylat-, Epoxid-, Aspartat- und Urethanpolymeren und -copolymeren und
   (iii) eine zwischen der ersten und der zweiten Anstrichschicht angeordnete aus erster mineralischer Spachtelmasse gebildete Schicht wie in den Ansprüchen definiert, die ein mineralisches Bindemittel enthält, wobei diese Schicht frei ist von Epoxiden, Isocyanaten, Aspartaten und deren Reaktionsprodukten,
wobei die Beschichtung eine Haftzugfestigkeit bestimmt nach DIN EN ISO 4624 von ≥ 1,5 N/mm² besitzt und/oder der Verbund aus Betonkörper und Beschichtung einen Bruchanteil im Beton von ≥ 30% bestimmt nach DIN EN ISO 4624 besitzt.

In einer anderen bevorzugten Variante umfasst ein Element für einen Turm für eine Windenergieanlage,
(a) einen Betonkörper mit einer Betonoberfläche
(b) eine auf der Betonoberfläche angeordnete Beschichtung, wobei die Beschichtung umfasst
   (i) eine erste Anstrichschicht, ausgewählt aus der Gruppe bestehend aus Schichten basierend auf (Meth)acrylat-, Epoxid- und Aspartatpolymeren und -copolymeren
   (ii) eine zweite Anstrichschicht, ausgewählt aus der Gruppe bestehend aus Schichten basierend auf (Meth)acrylat-, Epoxid-, Aspartat- und Urethanpolymeren und -copolymeren und
   (iii) eine zwischen der ersten und der zweiten Anstrichschicht angeordnete aus erster mineralischer Spachtelmasse gebildete Schicht wie in den Ansprüchen definiert, die ein mineralisches Bindemittel enthält, wobei diese Schicht frei ist von Epoxide, Isocyanaten, Aspartaten und deren Reaktionsprodukten,
weiter umfassend zwischen der Betonoberfläche des Betonkörpers und der ersten Anstrichschicht eine aus zweiter mineralischer Spachtelmasse gebildete Schicht, wobei diese Schicht frei ist von Epoxiden, Isocyanaten, Aspartaten und deren Reaktionsprodukten
wobei die Beschichtung eine Haftzugfestigkeit bestimmt nach DIN EN ISO 4624 von ≥ 1,5 N/mm² besitzt und/oder der Verbund aus Betonkörper und Beschichtung einen Bruchanteil im Beton von ≥ 30% bestimmt nach DIN EN ISO 4624 besitzt.

Besonders bevorzugt ist das erfindungsgemäße Verfahren (wie in den Ansprüchen definiert) ein Verfahren zum Herstellen eines Elements für einen Turm für eine Windenergieanlage,
umfassend die Schritte:
a) Bereitstellen eines Betonkörpers für ein Element für einen Turm für eine Windenergieanlage,
b) Bereitstellen von Beschichtungsmaterial für die erste Anstrichschicht,
c) Bereitstellen von Beschichtungsmaterial für die zweite Anstrichschicht,
d) Bereitstellen einer ersten mineralischen Spachtelmasse, die ein mineralisches Bindemittel enthält und frei ist von Epoxiden, Isocyanaten, Aspartaten und deren Reaktionsprodukten
e) Auftragen des Beschichtungsmaterials für die erste Anstrichschicht mittelbar oder unmittelbar auf den Betonkörper,
f) flächiges Auftragen der ersten mineralischen Spachtelmasse auf die erste Anstrichschicht, wobei nach Schritt f) die erste mineralische Spachtelmasse so entfernt wird, dass eine mittlere Beschichtungsdicke der ersten mineralischen Spachtelmasse von 0,005 mm bis 2 mm und/oder eine mittlere Auftragsmenge an trockener mineralischer Spachtelmasse von 10 g/m² bis 500 g/m² entsteht, und
g) Auftragen des Beschichtungsmaterials für die zweite Anstrichschicht auf die erste mineralische Spachtelmasse.

In bestimmten Fällen ist eine Variante dieses Verfahrens zum Herstellen eines Elements für einen Turm für eine Windenergieanlage bevorzugt,
wobei nach Schritt f) die erste mineralische Spachtelmasse so entfernt wird, dass eine mittlere Beschichtungsdicke der ersten mineralischen Spachtelmasse von 0,005 mm bis 2 mm und/oder eine mittlere Auftragsmenge an trockener erster mineralischer Spachtelmasse von 40 g/m² bis 150 g/m² entsteht,
wobei vor Schritt e) eine zweite mineralische Spachtelmasse bereit gestellt und lokal im Bereich der Lunkern, Poren und Löchern an der Betonoberfläche appliziert wird die frei ist von Isocyanaten, Aspartaten und deren Reaktionsprodukten.

Durch das Einsetzen mineralischer Spachtelmassen, die ein mineralisches Bindemittel enthalten und frei sind von Epoxiden, Isocyanaten, Aspartaten und deren Reaktionsprodukten, sind aufwändige Personenschutz-Maßnahmen wie das Tragen von Schutzkleidung und Schutzmaske vermeidbar.

Die Erfindung wird nachstehend anhand von Beispielen erläutert.

### Betonkörper

Bei den für die Beispiele 1 und 2 eingesetzten Betonkörpern handelt es sich um Elemente für einen Turm für eine Windenergieanlage, die in üblicher Art und Weise hergestellt wurden.

### Vorbereitung der Betonoberfläche (optional)

Die Oberfläche wird erforderlichenfalls von Staub und Verunreinigungen gesäubert. Soweit die Betonoberfläche des Betonkörpers oberflächennahe verschlossene Poren und Lunker aufweist, werden diesem mittels eines Drahtbesens geöffnet. Bei Bedarf wird zur Unterstützung Druckluft eingesetzt.

### Aus (zweiter) mineralischer Spachtelmasse gebildete Schicht im Bereich der Lunker, Poren und Löcher (optional)

Auf die ca. 8 Stunden alte Betonoberfläche des Betonkörpers, die bevorzugt eine Restfeuchte von 4 Gew.-% oder weniger und eine Temperatur im Bereich von 15 bis 45 °C aufweist, wird mittels einer Maurerkelle eine mineralische Spachtelmasse (Produktbezeichnung Ardex A 46, Hersteller: Ardex GmbH, Witten, Deutschland) mit einer Auftragsmenge von 70 g/m² bis 150 g/m², so aufgetragen, dass Lunkern, Löchern und Poren verschlossen werden.

Außerhalb der Poren und Lunker wird die noch nicht ausgehärtete mineralische Spachtelmasse mittels eines Japanspachtels abgezogen und/oder abgestoßen.

Die Trockenzeit der aus der (zweiten) mineralischen Spachtelmasse gebildeten Schicht beträgt 20 bis 60 Minuten.

### Erste Anstrichschicht

Für die Herstellung eines erfindungsgemäßen Betonkörpers gemäß Beispiel 1 wird als Beschichtungsmaterial für die erste Anstrichschicht eine zweikomponentige, pigmentierte, in Wasser dispergierte Epoxidharz-Formulierung (Produktbezeichnung: MC DUR 1177 WPT, Hersteller MC-Bauchemie Müller GmbH & Co. KG, Bottrop, Deutschland) in einer Menge von 50 g/m² bis 150 g/m², bevorzugt von 80 bis 100 mg/m² mit einem Farbroller aufgetragen. Die Trockenzeit der ersten Anstrichschicht beträgt 60 bis 120 Minuten.

Für die Herstellung eines erfindungsgemäßen Betonkörpers gemäß Beispiel 2 wird als Beschichtungsmaterial für die erste Anstrichschicht ein Acrylharz-Anstrichstoff (Produktbezeichnung Sikagard 680 S Betoncolor, Hersteller Sika Deutschland GmbH, Stuttgart, Deutschland) in einer Nassschichtdicke von 80 bis 120 µm, bevorzugt 100 µm, und/oder mit einer Auftragsmenge von 100 g/m² bis 250 g/m², bevorzugt 150 bis 200 g/m² aufgetragen Die Mindesttrockenzeit der ersten Anstrichschicht beträgt 15 bis 30 Minuten.

### Aus erster mineralischer Spachtelmasse gebildete Schicht

Nach der Trockenzeit der ersten Anstrichschicht (wie oben angegeben) wird auf deren Oberfläche mittels einer Glättkelle eine mineralische Spachtelmasse (Produktbezeichnung Ardex F3, Hersteller: Ardex GmbH, Witten, Deutschland) flächig aufgetragen, Poren und Lunker bei diesem Arbeitsschritt durch entsprechenden Druck auf die Glättkelle verschlossen. Sofort im Anschluss nach dem erfolgten Auftrag wird die mineralische Spachtelmasse mit einem Flächenspachtel in Gegenrichtung zur Auftragsrichtung wieder abgezogen und/oder abgestoßen, dass eine mittlere Beschichtungsdicke der ersten mineralischen Spachtelmasse von 0,005 mm bis 2 mm und/oder eine mittlere Auftragsmenge an trockener Spachtelmasse von 10 g/m² bis 500 g/m², bevorzugt 40 g/m² bis 80 g/m² entsteht.

### Zweite Anstrichschicht

Für die Herstellung eines erfindungsgemäßen Betonkörpers gemäß Beispiel 1 wird als Beschichtungsmaterial für die zweite Anstrichschicht eine zweikomponentige, pigmentierte, in Wasser dispergierte Epoxidharz-Formulierung (Produktbezeichnung: MC DUR 1177 WPT, Hersteller MC-Bauchemie Müller GmbH & Co. KG, Bottrop, Deutschland) in einer Menge von 10 mg/m², bis 100 mg/m², bevorzugt 20 mg/m², bis 50 g/m² aufgetragen. Die Trockenzeit der zweiten Anstrichschicht beträgt 30 bis 60 Minuten.

Für die Herstellung eines erfindungsgemäßen Betonkörpers gemäß Beispiel 2 wird als Beschichtungsmaterial für die zweite Anstrichschicht ein Acrylharz-Anstrichstoff (Produktbezeichnung Sikagard 680 S Betoncolor:, Hersteller Sika Deutschland GmbH, Stuttgart, Deutschland) in einer Nassschichtdicke von 100 bis 250 µm, bevorzugt 150 µm bis 200 µm mittels einer Lammfellrolle aufgetragen

### Dritte Anstrichschicht (optional)

Für die Herstellung eines erfindungsgemäßen Betonkörpers gemäß Beispiel 1 wird als Beschichtungsmaterial für die dritte Anstrichschicht ein Zweikomponenten-Decklack auf Polyaspartat-Basis (Produktbezeichnung: solvatic 2K-PUR-Decklack HS ZD58- Beton, Hersteller: Dresdner Lackfabrik novatic GmbH & Co. KG., Dresden, Deutschland) in einer Nassschichtdicke von 100 µm bis 300 µm, bevorzugt 150 µm bis 180 µm mit einer Auftragsmenge von 200 g/m² bis 400 g/m², bevorzugt 200 bis 330 g/m² mit einem Farbroller aufgetragen.

Für die Herstellung eines erfindungsgemäßen Betonkörpers gemäß Beispiel 2 wird als Beschichtungsmaterial für die dritte Anstrichschicht erneut ein Acrylharz-Anstrichstoff (Produktbezeichnung Sikagard 680 S Betoncolor, Hersteller Sika Deutschland GmbH, Stuttgart, Deutschland) mittels einer Lammfellrolle aufgetragen, so dass die Gesamt-Auftragsmenge an Sikagard 680 S Betoncolor aus der zweiten und der dritten Schicht 350 g/m² bis 500 g/m² beträgt, bevorzugt 400 g/m² bis 450 g/m².

### Haftzugfestigkeit nach DIN EN ISO 4624

Die Haftzugfestigkeit gemäß DIN EN ISO 4624, gemessen nach 24 Stunden Trocknung bei 20 °C des beschichteten Betonkörpers aus Beispiel 1 beträgt 3 bis 4 N/mm².

Die Haftzugfestigkeit gemäß DIN EN ISO 4624, gemessen nach 24 Stunden Trocknung bei 20 °C des beschichteten Betonkörpers aus Beispiel 2 beträgt 3-4 N/mm².

### Bruchanteil im Beton nach DIN EN ISO 4624

Der Bruchanteil im Beton gemäß DIN EN ISO 4624, gemessen nach 24 Stunden Trocknung bei 20 °C des beschichteten Betonkörpers aus Beispiel 1 beträgt 60 bis 100 %.

Der Bruchanteil im Beton gemäß DIN EN ISO 4624, gemessen nach 24 Stunden Trocknung bei 20 °C des beschichteten Betonkörpers aus Beispiel 2 beträgt 60 bis 100 %.

## Patentansprüche

1. Beschichteter Betonkörper, umfassend
(a) einen Betonkörper mit einer Betonoberfläche
(b) eine auf der Betonoberfläche angeordnete Beschichtung, wobei die Beschichtung umfasst
(i) eine erste Anstrichschicht, ausgewählt aus der Gruppe bestehend aus Schichten basierend auf (Meth)acrylat-, Epoxid- und Aspartatpolymeren und -copolymeren
(ii) eine zweite Anstrichschicht, ausgewählt aus der Gruppe bestehend aus Schichten basierend auf (Meth)acrylat-, Epoxid-, Aspartat- und Urethanpolymeren und -copolymeren
(iii) eine zwischen der ersten und der zweiten Anstrichschicht angeordnete aus einer ersten mineralischen Spachtelmasse gebildete Schicht, die ein mineralisches Bindemittel enthält mit einer mittleren Beschichtungsdicke der ersten mineralischen Spachtelmasse von 0,005 mm bis 2 mm und/oder eine mittleren Auftragsmenge an trockener mineralischer Spachtelmasse von 10 g/m² bis 500 g/m²
wobei die Beschichtung eine Haftzugfestigkeit bestimmt nach DIN EN ISO 4624 von ≥ 1,0 N/mm² besitzt und der Verbund aus Betonkörper und Beschichtung einen Bruchanteil im Beton von ≥ 20% bestimmt nach DIN EN ISO 4624 besitzt.

2. Beschichteter Betonkörper nach Anspruch 1, umfassend zwischen der Betonoberfläche des Betonkörpers und der ersten Anstrichschicht eine aus zweiter mineralischer Spachtelmasse gebildete Schicht.

3. Beschichteter Betonkörper nach Anspruch 1 oder 2, wobei die Beschichtung eine dritte Anstrichschicht umfasst, ausgewählt aus der Gruppe bestehend aus Schichten basierend auf (Meth)Acrylat-, Urethan- und Aspartatpolymeren und -copolymeren sowie Schichten basierend auf anderen witterungsbeständigen Beschichtungsmaterialien.

4. Beschichteter Betonkörper nach einem der vorangehenden Ansprüche, wobei der Betonkörper ein Element für einen Turm, insbesondere für einen Turm für eine Windenergieanlage ist.

5. Verfahren zum Herstellen eines beschichteten Betonkörpers nach einem der Ansprüche 1 bis 4, umfassend die Schritte:
a) Bereitstellen eines Betonkörpers,
b) Bereitstellen von Beschichtungsmaterial für die erste Anstrichschicht,
c) Bereitstellen von Beschichtungsmaterial für die zweite Anstrichschicht,
d) Bereitstellen der ersten mineralischen Spachtelmasse, wobei die erste mineralische Spachtelmasse ein mineralisches Bindemittel enthält
e) Auftragen des Beschichtungsmaterials für die erste Anstrichschicht mittelbar oder unmittelbar auf den Betonkörper,
f) flächiges Auftragen der ersten mineralischen Spachtelmasse auf die erste Anstrichschicht, wobei nach Schritt f) die erste mineralische Spachtelmasse so entfernt wird, dass eine mittlere Beschichtungsdicke der ersten mineralischen Spachtelmasse von 0,005 mm bis 2 mm und/oder eine mittlere Auftragsmenge an trockener mineralischer Spachtelmasse von 10 g/m² bis 500 g/m² entsteht, und
g) Auftragen des Beschichtungsmaterials für die zweite Anstrichschicht auf die erste mineralische Spachtelmasse.

6. Verfahren nach Anspruch 5, wobei vor Schritt e) eine zweite mineralische Spachtelmasse bereit gestellt und auf den Betonkörper aufgetragen wird.

7. Verfahren nach Anspruch 5 oder 6, wobei vor Schritt e) oder vor Auftrag der zweiten mineralischen Spachtelmasse auf der Betonoberfläche Staub oder anderen lose Bestandteile verringert werden und/oder Poren und Lunker geöffnet werden, insbesondere durch eine Maßnahme, ausgewählt aus der Gruppe bestehend aus Beaufschlagen mit Druckluft, mechanisches Abreiben, Abfegen mit einem Drahtbesen, Abschleifen oder Wischen.

8. Verfahren nach einem der Ansprüche 5 bis 7, wobei das Beschichtungsmaterial bzw. die mineralische Spachtelmasse auf die Betonoberfläche bzw. auf die zuvor aufgetragene Schicht aufgetragen wird, bevor die Betonoberfläche bzw. die zuvor aufgetragene Schicht vollständig ausgehärtet ist.

9. Verfahren nach einem der Ansprüche 5 bis 8, wobei nach Schritt g) Beschichtungsmaterial für eine dritte Anstrichschicht bereit gestellt und aufgetragen wird.

## Claims

1. Coated concrete body comprising
(a) a concrete body having a concrete surface
(b) a coating disposed on the concrete surface, the coating comprising
(i) a first coating layer selected from the group consisting of layers based on (meth)acrylate, epoxide, and aspartate polymers and copolymers,
(ii) a second coating layer selected from the group consisting of layers based on (meth)acrylate, epoxide, aspartate, and urethane polymers and copolymers,
(iii) a layer disposed between the first and second coating layers and formed of a first mineral filling compound, and comprising a mineral binder having an average coating thickness of the first mineral filling compound of 0.005 mm to 2 mm and/or an average application rate of dry mineral filling compound of 10 g/m² to 500 g/m²,
wherein the coating possesses a tensile adhesive strength, determined according to DIN EN ISO 4624, of ≥ 1.0 N/mm² and the assembly composed of concrete body and coating possesses a fracture component in the concrete of ≥ 20%, determined according to DIN EN ISO 4624.

2. Coated concrete body according to Claim 1, comprising, between the concrete surface of the concrete body and the first coating layer, a layer formed of second mineral filling compound.

3. Coated concrete body according to Claim 1 or 2, wherein the coating comprises a third coating layer selected from the group consisting of layers based on (meth)acrylate, urethane, and aspartate polymers and copolymers and also layers based on other weathering-resistant coating materials.

4. Coated concrete body according to any of the preceding claims, wherein the concrete body is an element for a tower, more particularly for a tower for a wind turbine.

5. Method for producing a coated concrete body according to any of Claims 1 to 4, comprising the steps of:
a) providing a concrete body,
b) providing coating material for the first coating layer,
c) providing coating material for the second coating layer,
d) providing the first mineral filling compound, the first mineral filling compound comprising a mineral binder
e) applying the coating material for the first coating layer directly or indirectly to the concrete body,
f) applying the first mineral filling compound over the surface of the first coating layer, wherein after step f) the first mineral filling compound is removed so as to produce an average coating thickness of the first mineral filling compound of 0.005 mm to 2 mm and/or an average application rate of dry mineral filling compound of 10 g/m² to 500 g/m², and
g) applying the coating material for the second coating layer to the first mineral filling compound.

6. Method according to Claim 5, wherein before step e) a second mineral filling compound is provided and applied to the concrete body.

7. Method according to Claim 5 or 6, wherein before step e) or before application of the second mineral filling compound, on the concrete surface, dust or other loose constituents are reduced and/or pores and cavities are opened, in particular by means of a measure selected from the group consisting of attacking with compressed air, mechanical abrasion, sweeping with a wire broom, sanding down, or wiping.

8. Method according to any of Claims 5 to 7, wherein the coating material and/or the mineral filling compound are/is applied to the concrete surface and/or to the previously applied layer, respectively, before the concrete surface and/or the previously applied layer, respectively, are/is fully cured.

9. Method according to any of Claims 5 to 8, wherein after step g) coating material for a third coating layer is provided and applied.

## Revendications

1. Corps en béton revêtu, comprenant
(a) un corps en béton avec une surface en béton,
(b) un revêtement disposé sur la surface en béton, dans lequel le revêtement comprend
(i) une première couche de peinture choisie parmi le groupe constitué de couches à base de polymères et copolymères de (méth)acrylate, d'époxyde et d'aspartate
(ii) une deuxième couche de peinture choisie parmi le groupe constitué de couches à base de polymères et de copolymères de (méth)acrylate, d'époxyde, d'aspartate et d'uréthane
(iii) une couche disposée entre la première et la deuxième couche de peinture, formée à partir d'un premier mastic minéral, qui contient un liant minéral avec une épaisseur de revêtement moyenne du premier mastic minéral allant de 0,005 mm à 2 mm et/ou une quantité d'application moyenne de mastic minéral sec allant de 10 g/m² à 500 g/m²
dans lequel le revêtement possède une résistance à la traction par adhérence définie selon la norme DIN EN ISO 4624 ≥ 1,0 N/mm² et le composite composé du corps en béton et du revêtement possède un pourcentage dans le béton ≥ 20 % défini selon la norme DIN EN ISO 4624.

2. Corps en béton revêtu selon la revendication 1, comprenant, entre la surface en béton du corps en béton et la première couche de peinture, une couche formée à partir d'un deuxième mastic minéral.

3. Corps en béton revêtu selon la revendication 1 ou 2, dans lequel le revêtement comprend une troisième couche de peinture choisie parmi le groupe constitué de couches à base de polymères et de copolymères de (méth)acrylate, d'uréthane et d'aspartate ainsi que de couches à base d'autres matériaux de revêtement résistant aux intempéries.

4. Corps en béton revêtu selon l'une quelconque des revendications précédentes, dans lequel le corps en béton est un élément pour une tour, en particulier pour une tour pour une éolienne.

5. Procédé servant à fabriquer un corps en béton revêtu selon l'une quelconque des revendications 1 à 4, comprenant les étapes :
a) de fourniture d'un corps en béton,
b) de fourniture du matériau de revêtement pour la première couche de peinture,
c) de fourniture du matériau de revêtement pour la deuxième couche de peinture,
d) de fourniture du premier mastic minéral, dans lequel le premier mastic minéral contient un liant minéral
e) d'application du matériau de revêtement pour la première couche de peinture indirectement ou directement sur le corps en béton,
f) d'application en surface du premier mastic minéral sur la première couche de peinture, dans lequel, après l'étape f), le premier mastic minéral est retiré de telle sorte qu'une épaisseur de revêtement moyenne du premier mastic minéral allant de 0,005 mm à 2 mm et/ou une quantité d'application moyenne de mastic minéral sec allant de 10 g/m² à 500 g/m² sont obtenues, et
g) d'application du matériau de revêtement pour la deuxième couche de peinture sur le premier mastic minéral.

6. Procédé selon la revendication 5, dans lequel, avant l'étape e) , un deuxième mastic minéral est fourni et appliqué sur le corps en béton.

7. Procédé selon la revendication 5 ou 6, dans lequel, avant l'étape e) ou avant l'application du deuxième mastic minéral sur la surface en béton, de la poussière ou d'autres constituants volatiles sont réduits et/ou des pores et des creux sont ouverts, en particulier par une mesure choisie parmi le groupe constitué d'une action exercée par de l'air comprimé, d'un frottement mécanique, d'un balayage avec un balai métallique, d'un ponçage ou d'un essuyage.

8. Procédé selon l'une quelconque des revendications 5 à 7, dans lequel le matériau de revêtement ou le mastic minéral est appliqué sur la surface en béton ou sur la couche appliquée au préalable avant que la surface en béton ou la couche appliquée au préalable ne soit totalement durcie.

9. Procédé selon l'une quelconque des revendications 5 à 8, dans lequel, après l'étape g), du matériau de revêtement est fourni pour une troisième couche de peinture et appliqué.
